(19) Europäisches Patentamt
European Patent Office
Office européen des brevets

(11) EP 4 563 613 A1

(12) **EUROPÄISCHE PATENTANMELDUNG**

(43) Veröffentlichungstag:
**04.06.2025 Patentblatt 2025/23**

(21) Anmeldenummer: **23213222.5**

(22) Anmeldetag: **30.11.2023**

(51) Internationale Patentklassifikation (IPC):
***C08G 59/38*** *(2006.01)* ***C09J 163/00*** *(2006.01)*
***C04B 26/14*** *(2006.01)*

(52) Gemeinsame Patentklassifikation (CPC):
**C04B 26/14; C08G 59/38; C09J 163/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder: **Behrens, Nicole**
**81245 München (DE)**

(74) Vertreter: **Hilti Aktiengesellschaft**
**Corporate Intellectual Property**
**Feldkircherstrasse 100**
**Postfach 333**
**9494 Schaan (LI)**

# (54) VERWENDUNG EINER TRIFUNKTIONELLEN EPOXIDVERBINDUNG ZUR VERBESSERUNG VON EIGENSCHAFTEN EINES CHEMISCHEN DÜBELS

(57) Beschrieben wird die Verwendung von mindestens einer trifunktionellen Epoxidverbindung als Reaktivverdünner in einem chemischen Dübel. Die mindestens eine trifunktionelle Epoxidverbindung ist ausgewählt aus der Gruppe bestehend aus trifunktionellen Epoxidverbindungen mit einem Epoxidäquivalenzgewicht (EEW) von kleiner 130 g/eq und beliebigen Mischungen von zweien oder mehreren davon. Durch diese spezifische trifunktionelle Epoxidverbindung wird die Versagenslast eines chemischen Dübels bei einer Untergrundtemperatur von etwa 30°C bis etwa 90°C verringert im Vergleich zu einem chemischen Dübel, welcher mono- oder difunktionelle Reaktivverdünner enthält oder trifunktionelle Reaktivverdünner mit einem EEW von mindestens 130 g/eq .

EP 4 563 613 A1

## Beschreibung

Die vorliegende Erfindung betrifft die Verwendung von mindestens einer trifunktionellen Epoxidverbindung als Reaktivverdünner in einem chemischen Dübel. Die mindestens eine trifunktionelle Epoxidverbindung ist ausgewählt aus der Gruppe bestehend aus trifunktionellen Epoxidverbindungen mit einem Epoxidäquivalenzgewicht (EEW) von kleiner oder gleich 130 g/eq und beliebigen Mischungen von zweien oder mehreren davon. Durch diese spezifische trifunktionelle Epoxidverbindung wird die Versagenslast eines chemischen Dübels bei einer Untergrundtemperatur von etwa 30°C bis etwa 90°C erhöht im Vergleich zu einem chemischen Dübel, welcher den gleichen Anteil eines trifunktionellen Reaktivverdünners aus einer alternativen Syntheseroute und dadurch bedingt mit einem EEW von größer 130 g/eq enthält.

Die vorliegende Erfindung betrifft ferner ein mehrkomponentiges Befestigungsmörtelsystem, umfassend eine Epoxidharzkomponente (A) enthaltend wenigstens ein härtbares Epoxidharz und die wenigstens eine trifunktionellen Epoxidverbindung mit einem Epoxidäquivalenzgewicht (EEW) von kleiner 130 g/eq als Reaktivverdünner, und eine Härterkomponente (B) enthaltend wenigstens ein gegenüber Epoxidgruppen reaktives Amin, sowie dessen Verwendung zum Befestigen von Verankerungselementen. Die vorliegende Erfindung betrifft weiterhin ein Verfahren zur Befestigung von einem Verankerungselement in einem Loch oder Spalt in einem Bausubstrat unter Verwendung des mehrkomponentigen Befestigungsmörtelsystems.

Ferner betrifft die vorliegende Erfindung die Verwendung einer Kombination von (i) mindestens einem Epoxidharz ausgewählt aus der Gruppe bestehend aus Bisphenyl-A-diglycidylether, Bisphenol-F-diglycidylether und Novolak-Epoxidharz und Mischungen davon und (ii) einem oder einem Gemisch trifunktioneller Epoxidverbindungen als Reaktivverdünner mit einem Epoxidäquivalenzgewicht (EEW) von kleiner 130 g/eq als Harzkomponente eines mehrkomponentigen Befestigungsmörtelsystems zum Erhöhen der Verbundspannung, insbesondere bei erhöhter Temperatur eines chemischen Dübels bei einer Untergrundtemperatur von etwa 30°C bis etwa 90°C im Vergleich zu einem chemischen Dübel, welcher diese trifunktionelle Epoxidverbindung aus einer alternativen Syntheseroute und dadurch bedingt mit einem EEW von größer als 130 g/eq enthält.

Mehrkomponentige Klebstoffe und Mörtelsysteme werden häufig in Bauanwendungen eingesetzt. Solche Systeme bestehen oft aus einer Komponente, die eine Mischung verschiedener Epoxide enthält, und einem Aminhärter als Bestandteil einer zweiten Komponente. Nach Mischen und Aushärten des Systems wird ein hochvernetztes Polymer erhalten.

Eine Anwendung solcher mehrkomponentiger Systeme ist die als chemischer Dübel, bei der eine Ankerstange oder ein Verstärkungseisen in einem Untergrund wie Beton, Mauerwerk oder Holz befestigt wird. Für diese Anwendung werden sehr steife Systeme benötigt. Diese Steifigkeit wird in der ersten Komponente durch aromatische Grundstrukturen enthaltende Epoxide wie Bisphenol-A-diglycidylether, Bisphenol-F-diglycidylether und/oder Epoxy-modifizierte Novolake erreicht. Um die Verarbeitbarkeit zu erleichtern, werden üblicherweise Reaktivverdünner beigemischt, die die Viskosität absenken und eine bessere Mischbarkeit mit der Härterkomponente bewirken. Die Viskosität eines Reaktivverdünners muss daher niedriger sein als die des zu verdünnenden Epoxidharzes und er muss Gruppen aufweisen, die zu einer Reaktion mit dem Härter führen. Bei der Verwendung von Bisphenol-A-diglycidylether und Bisphenol-F-diglycidylether sollte der Reaktivverdünner eine Viskosität von weniger als 2000 mPas aufweisen, bevorzugt von weniger als 1000 mPas und besonders bevorzugt von weniger als 800 mPas. Üblicherweise werden di-, teils zusätzlich auch trifunktionelle Reaktivverdünner, wie in der EP 1118628 A1 beschrieben, zugemischt. Trifunktionelle Reaktivverdünner allein werden in der Regel nicht eingesetzt, da der verdünnende Effekt deutlich geringer ist als bei difunktionellen Verdünnern.

Ein Nachteil der Verwendung von di-funktionellen und nicht-reaktiven Verdünnern ist, dass sie den Vernetzungsgrad des Polymers im Vergleich zur aromatischen Grundstruktur nicht erhöhen. Damit wird auch die Steifigkeit des Polymers nicht erhöht, sondern bleibt im besten Fall auf gleichem Niveau. Gleiches gilt für die Glasübergangstemperatur von Systemen, die auf Epoxidharzmischungen mit di-funktionellen und nicht-reaktiven Verdünnern basieren. In der Regel führt die Beimischung dieser Verdünner zu einer Absenkung der Glasübergangstemperatur im Vergleich zu Epoxiden mit rein aromatischen Grundstrukturen. Dies führt zu einer Verringerung der Verbundspannung, insbesondere bei erhöhter Temperatur.

Die Aushärtung chemischer Dübel erfolgt typischerweise am gewünschten Verwendungsort bei den dort im Untergrund herrschenden Umgebungstemperaturen. Da chemische Dübel typischerweise im Bauwesen verwendet werden, entsprechen die Umgebungstemperaturen den Außentemperaturen. Diese bewegen sich üblicherweise im Bereich von etwa -10°C bis etwa 60°C. Im Untergrund sind je nach Sonneneinstrahlung und weiteren Einflüssen auch deutlich höhere Temperaturen möglich, beispielsweise von etwa 40°C bis etwa 90°C.

Die mechanischen Eigenschaften chemischer Dübel können durch die Umgebungstemperatur beeinträchtigt werden. So kann schon ein Temperaturabfall während der Härtungsreaktion bereits zu einer erheblichen Abnahme der Tragfähigkeit des anschließend ausgehärteten chemischen Dübels führen. Andererseits kann eine Temperaturerhöhung nach der Aushärtung des chemischen Dübels ebenfalls zu einer erheblichen Abnahme der Tragfähigkeit des chemischen Dübels führen

Auch ist der chemische Dübel in seiner Lebenszeit immer wieder schwankenden Temperaturen ausgesetzt. Vor

allem das Auftreten erhöhter Temperaturen über einen längeren Zeitraum kann die Tragfähigkeit eines chemischen Dübels beeinträchtigen. Bereits stark schwankende kurzfristige Untergrundtemperaturen, insbesondere aber langfristig erhöhte Untergrundtemperaturen, können sich während der Nutzungsdauer eines chemischen Dübels ungünstig auf dessen Materialeigenschaften auswirken.

Insbesondere kommt es verstärkt zum sogenannten "Kriechen", also zur Verformung eines chemischen Dübels. So kann sich ein chemischer Dübel bei einer erhöhten Untergrundtemperatur von etwa 30°C bis etwa 90°C bereits in einem Zeitraum von wenigen Stunden unter dem Einfluss anhaltender mechanischer Beanspruchungen, wie z. B. Dauerlasten, langsam bewegen oder dauerhaft verformt werden. Die Traglasten verringern sich also.

Da Gebäude in unterschiedlichen Klimazonen starken Temperaturschwankungen ausgesetzt sind, ist es vorteilhaft, wenn die Steifigkeit der Verankerung durch den Mörtel in einem weiten Temperaturbereich konstant hoch bleibt. Auch mit zunehmender Klimaerwärmung ist zukünftig auch in Zonen mit bisher gemäßigtem Klima mit höheren Umgebungstemperaturen im Untergrund infolge starker Sonneneinstrahlung zu rechnen, wodurch sich der Untergrund auf eine Untergrundtemperatur je nach Außentemperatur und Wetterlage auf etwa 40°C oder darüber aufheizen kann. Mehrkomponenten-Harzsysteme, die im Stand der Technik beschrieben sind, zeigen sich diesen Herausforderungen häufig nicht gewachsen.

Um der Kriechneigung von chemischen Dübeln entgegenzuwirken, ist die Entwicklung neuer Mehrkomponenten-Harzsysteme zur Anwendung bei erhöhten Temperaturen, insbesondere von etwa 30°C bis etwa 90°C, wünschenswert. Epoxid-Amin-Systeme mit einer hohen Glasübergangstemperatur werden daher bevorzugt. Eine erhöhte Glasübergangstemperatur führt in der Regel zu höheren Verbundspannungen bei Auszugsversuchen des Dübels bei Temperaturen oberhalb Raumtemperatur.

Es besteht daher Bedarf an Befestigungsmörteln, die nach dem Aushärten bei höheren Temperaturen eine höhere Verbundspannung aufweisen.

Eine der Erfindung zugrundeliegende Aufgabe ist demzufolge die Bereitstellung eines mehrkomponentigen Befestigungsmörtelsystems, welches bei Verwendung als chemischer Dübel bei einer erhöhten Untergrundtemperatur wie beispielsweise von etwa 30°C bis etwa 90°C ein verbessertes Kriechverhalten des ausgehärteten Mörtels zeigt.

Eine weitere der Erfindung zugrundeliegende Aufgabe ist die Bereitstellung eines mehrkomponentigen Befestigungsmörtelsystems für einen chemischen Dübel, der nach dem Aushärten eine hohe Druckfestigkeit und damit eine höhere Verbundspannung im Vergleich zu einem chemischen Dübel, welcher einen geringeren Anteil an dem mindestens einen trifunktionellen Epoxidverbindung oder die mindestens eine trifunktionelle Epoxidverbindung nicht enthält, aufweist. Eine weitere der Erfindung zugrundeliegende Aufgabe ist die Bereitstellung eines mehrkomponentigen Befestigungsmörtelsystems für einen chemischen Dübel, der eine hohe Glasübergangstemperatur nach Nachhärtung, beispielsweise für das Amin Vestamin® TMD bis zu etwa 90°C aufweist.

Die der Erfindung zugrundeliegenden Aufgaben werden durch die in den unabhängigen Ansprüchen definierten Verwendungen gelöst. Bevorzugte Ausführungsformen der Erfindung sind in den abhängigen Ansprüchen definiert, deren Merkmale, soweit nicht anders angegeben, frei miteinander kombiniert werden können.

Ein erster Gegenstand der Erfindung ist die Verwendung von mindestens einer trifunktionellen Epoxidverbindung mit einem Epoxidäquivalenzgewicht (EEW) von kleiner 130 g/eq, um die Versagenslast eines ausgehärteten chemischen Dübels bei einer Untergrundtemperatur von etwa 30°C bis etwa 90°C zu erhöhen im Vergleich zu einem chemischen Dübel, welcher eine trifunktionelle Epoxidverbindung mit einem EEW von größer als 130 g/eq enthält. Dabei wurde der ausgehärtete chemische Dübel durch Vermischen der Komponenten (A) und (B) eines mehrkomponentigen Befestigungsmörtelsystems und anschließendes Aushärten hergestellt, wobei das mehrkomponentige Befestigungsmörtelsystem aus: einer Epoxidharzkomponente (A) umfassend mindestens ein härtbares Epoxidharz und die trifunktionelle Epoxidverbindung mit einem Epoxidäquivalenzgewicht (EEW) von kleiner 130 g/eq als Reaktivverdünner, und einer Härterkomponente (B) umfassend mindestens ein gegenüber Epoxidgruppen reaktives Amin, besteht. Der Anteil der mindestens einen trifunktionellen Epoxidverbindung beträgt erfindungsgemäß etwa 5 Gew.-% bis etwa 30 Gew.-%, bezogen auf die härtbare Epoxidharzkomponente.

Ein zweiter Gegenstand der Erfindung ist die Verwendung von mindestens einer trifunktionellen Epoxidverbindung mit einem Epoxidäquivalenzgewicht (EEW) von kleiner 130 g/eq als Reaktivverdünner, zur Erhöhung der Verbundspannung des ausgehärteten Mörtels bei einer Untergrundtemperatur von etwa 30°C bis etwa 90°C im Vergleich zu einem chemischen Dübel ähnlicher Viskosität mit einem geringeren oder keinem Anteil des mindestens einen trifunktionellen Epoxidverbindung mit einem Epoxidäquivalenzgewicht (EEW) von kleiner 130 g/eq. Dabei wurde der ausgehärtete chemische Dübel durch Vermischen der Komponenten (A) und (B) eines mehrkomponentigen Befestigungsmörtelsystems und anschließendes Aushärten hergestellt, wobei das mehrkomponentige Befestigungsmörtelsystem aus: einer Epoxidharzkomponente (A) umfassend mindestens ein härtbares Epoxidharz und die trifunktionelle Epoxidverbindung mit einem Epoxidäquivalenzgewicht (EEW) von kleiner 130 g/eq als Reaktivverdünner, und einer Härterkomponente (B) umfassend mindestens ein gegenüber Epoxidgruppen reaktives Amin, besteht. Der Anteil der mindestens einen trifunktionellen Epoxidverbindung beträgt von etwa 5 Gew.-% bis etwa 30 Gew.-%, bezogen auf das mindestens eine härtbare Epoxidharz.

Ein dritter Gegenstand der Erfindung ist ein mehrkomponentiges Befestigungsmörtelsystem umfassend eine Epoxidharzkomponente (A), enthaltend wenigstens ein härtbares Epoxidharz und wenigstens eine trifunktionelle Epoxidverbindung als Reaktivverdünner, und eine Härterkomponente (B) enthaltend wenigstens ein gegenüber Epoxidgruppen reaktives Amin, wobei die trifunktionelle Epoxidverbindung unter Verbindungen mit einem Epoxidäquivalenzgewicht (EEW) von kleiner 130 g/eq ausgewählt ist, mit der Maßgabe, dass das mehrkomponentige Befestigungsmörtelsystem keine mono- und/oder difunktionelle und keine trifunktionelle Epoxidverbindung mit einem Epoxidäquivalenzgewicht (EEW) von größer als 130 g/eq enthält.

Ein vierter Gegenstand der Erfindung ist die Verwendung eines mehrkomponentiges Befestigungsmörtelsystems wie vorstehend definiert als chemischer Dübel zur Befestigung eines Konstruktionselements oder Verankerungsmittels in einer Vertiefung in einem Untergrund.

Überraschend wurde festgestellt, dass die Verwendung von mindestens einer trifunktionellen Epoxidverbindung mit einem Epoxidäquivalenzgewicht (EEW) von kleiner 130 g/eq in einem Anteil von etwa 5 Gew.-% bis etwa 30 Gew.-% in Abwesenheit von mono- und difunktionellen Epoxidverbindungen und von trifunktionellen Epoxidverbindungen mit einem Epoxidäquivalenzgewicht (EEW) von größer als oder gleich 130 g/eq (≥ 130 g/eq), das Kriechverhalten und die Verbundspannung (auch Versagenslast) eines ausgehärteten chemischen Dübels bei einer Untergrundtemperatur von etwa 30°C bis etwa 90°C im Vergleich zu einem chemischen Dübel mit einem geringeren oder keinem Anteil des mindestens einen trifunktionellen Epoxidverbindung mit einem Epoxidäquivalenzgewicht (EEW) von kleiner 130 g/eq verbessern bzw. erhöhen kann.

Durch die Erfindung kann ein verbessertes Kriechverhalten und können erhöhte Verbundspannungen bei Temperaturen oberhalb der Raumtemperatur, besonders bei Temperaturen von 70°C und darüber von chemischen Dübeln ermöglicht werden, was die chemischen Dübel besonders für die Verwendung in Bausubstraten, die hohen Temperaturen (z. B. durch starke Sonneneinstrahlung) ausgesetzt sind, geeignet macht.

Erfindungswesentlich ist, dass das Befestigungsmörtelsystem keine weiteren Reaktivverdünner mit niedrigerer Funktionalität enthält. Das bedeutet, dass neben den bestimmten trifunktionellen Reaktivverdünnern keine weiteren di- und/oder monofunktionellen Reaktivverdünner und keine anderen trifunktionellen Reaktivverdünner mit einem EEW größer als oder gleich 130 g/eq (≥ 130 g/eq) in dem Befestigungsmörtelsystem enthalten sind.

Im Sinne der Erfindung haben die hier und in der nachfolgenden Beschreibung verwendeten Begriffe die folgende Bedeutung:

"*aliphatische Verbindungen*" sind acyclische oder cyclische, gesättigte oder ungesättigte Kohlenstoffverbindungen, ausgenommen aromatische Verbindungen,

"*cycloaliphatische Verbindungen*" sind Verbindungen mit einer carbocyclischen Ringstruktur, ausgenommen Benzolderivate oder andere aromatische Systeme,

"*aromatische Verbindungen*" sind Verbindungen, die der Hückel (4n+2)-Regel folgen, und

"*Amine*" sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd Ed. (the "Gold Book"), Compiled by A. D. McNaught and A. Wilkinson, Blackwell Scientific Publications, Oxford (1997)).

Alle in diesem Text genannten Normen (z.B. DIN-Normen) wurden, soweit nicht anders angegeben, in der zum Anmeldetag dieser Anmeldung aktuellen Ausgabe verwendet. Alle Handelsnamen entsprechenden den Produkten, wie sie unter diesen Handelsnamen zum Zeitpunkt des Anmeldetages der vorliegenden Anmeldung verfügbar waren.

Bei dem Befestigungsmörtelsystem gemäß der vorliegenden Erfindung handelt es sich um ein "*mehrkomponentiges*" System. Ein mehrkomponentiges Befestigungsmörtelsystem enthält mehrere voneinander getrennt gelagerte Komponenten, so dass eine Härtung der in den Komponenten enthaltenen Inhaltsstoffe erst nach dem Vermischen aller Komponenten erfolgt. Insbesondere enthält das erfindungsgemäße mehrkomponentige Befestigungsmörtelsystem mindestens eine Komponente (A) (auch Epoxidharzkomponente), die Reaktiv-Kunstharz auf Epoxidharzbasis beinhaltet, und mindestens eine weitere Komponente (B) (auch Härterkomponente), die Härter beinhaltet. In einer bevorzugten Ausführungsform handelt es sich bei dem erfindungsgemäßen Befestigungsmörtelsystem um ein Zwei-Komponenten-System ("*2K-System*").

*Trifunktionelle Epoxidverbindung mit EEW < 130 g/eq*

Erfindungsgemäß wird eine trifunktionellen Epoxidverbindung oder eine Mischung mehrerer trifunktioneller

Epoxidverbindungen verwendet, wobei der (oder die) trifunktionelle(n) Epoxidverbindungen synthesebedingt ein besonders niedriges Epoxidäquivalenzgewicht (EEW), das bedeutet, ein Epoxidäquivalenzgewicht (EEW) von kleiner 130 g/eq aufweist bzw. aufweisen. Auch eine Mischung derartiger trifunktioneller Epxodiverbindungen weist ein Epoxidäquivalenzgewicht (EEW) von kleiner 130 g/eq.

Bevorzugt sind trifunktionelle Epoxidvervindungen mit kurzer aliphatischer Kette. So ist beispielsweise Trimethylolethantriglycidylether gegenüber Trimethylolpropantriglycidylether bevorzugt, vorausgesetzt diese Reaktivverdünner besitzen ein Epoxidäquivalenzgewicht (EEW) von kleiner 130 g/eq.

Diese Epoxidverbindungen können unter Verwendung unterschiedlicher Katalysatoren erhalten werden. Üblich ist die Umsetzung eines Alkohols/Polyols mit Epichlorhydrin in Anwesenheit einer Lewissäure, wie z. B. $AlCl_3$, $SbCl_5$, $SnCl_4$, $FeCl_3$, $SnCl_2$ oder $BF_3$, als Katalysator. Im zweiten Schritt erfolgt durch Zugabe von Natriumhydroxid eine Dehydrohalogenierung. In der EP 0495339 A1 ist weiterhin die Verwendung divalenter Zinnhalogenide als Katalysator beschrieben, bevorzugt in der Form von $SnF_2$. Die Verwendung divalender Zinnhalogenide führt zu Reaktionsprodukten, die sich von denen aus der Synthese mit üblichen Lewissäuren unterscheiden. Ihr Chlorgehalt ist geringer, weiterhin ist das Epoxidäquivalenzgewicht (EEW) des Reaktionsprodukts niedriger.

Die Herstellung der trifunktionellen Reaktivverdünner kann erfindungsgemäß nach einem z. B. in der EP 0495339 A1 beschriebenen Verfahren erfolgen, unter Verwendung von Trimethylolpropan, Trimethylolethan oder Glycerin. Beispielsweise kann sie, etwa unter Verwendung der genannten Alkohole, wie folgt durchgeführt werden (die konkreten Angaben (gekennzeichnet durch "*z.B.*") beziehen sich auf die im Beispielen verwendeten Reaktivverdünner):

Ein einem mit Rührer, Rückflusskühler, Tropftrichter und Thermometer ausgerüsteten Reaktor wird z. B. Trimethylolpropan (z. B. 1 mol) und Zinn(II)fluorid (z. B. 0,03 mol) vorgelegt und auf 130°C erhitzt. Anschließend wird Epichlorhydrin (z. B. 3,3 mol) unter Rühren über einen Zeitraum von zwei Stunden bei einer Temperatur von 130 bis 140°C zugegeben. Nach ca. drei Stunden bei dieser Temperatur wird auf 50°C abgekühlt und es werden z. B. 350 mL Xylol zugegeben, gefolgt von z. B. 30 g Celite (Filterhilfsmittel, Hersteller: Imerys). Nach 15 min Rühren wird die Suspension filtriert und anschließend das Lösungsmittel aus dem Filtrat am Rotationsverdampfer entfernt. Der flüssige Chlorhydrinether wird auf 55°C erhitzt und z. B. 252 g einer 50%igen NaOH-Lösung (z. B. 3,15 mol NaOH) langsam und unter Rühren über 30 min bei dieser Temperatur zugegeben. Nach weiteren 2,5 Stunden bei 50 - 60°C und Abkühlen auf Raumtemperatur wird die Suspension filtriert und das Filtrat mit Xylol gewaschen. Die organische Phase wird abgetrennt und über Magnesiumsulfat getrocknet. Nach einer weiteren Filtration wird das Lösungsmittel am Rotationsverdampfer entfernt und damit das Produkt, z.B. Trimethylolpropantriglycidylether, erhalten. Das Epoxidäquivalentgewicht (EEW) des Produkts beträgt z. B. 128 g/eq.

Die eben beschriebenen trifunktionellen Epoxidverbindungen können erfindungsgemäß als Reaktivverdünner in einem mehrkomponentigen Befestigungsmörtelsystem eingesetzt werden.

Erfindungswesentlich ist, wie oben ausgeführt, dass das mehrkomponentige Befestigungsmörtelsystem neben den trifunktionellen Epoxidverbindungen mit einem EEW von kleiner als 130 g/eq und den nachfolgend beschriebenen Epoxidharzen keine weiteren Epoxidverbindungen, insbesondere keine weiteren mono- und/oder difunktionellen Epoxidverbindungen und keine trifunktionellen Epoxidverbindungen mit einem EEW von größer als oder gleich 130 g/eq ($\geq$130 g/eq) enthält.

Dementsprechend ist ein weiterer Gegenstand der Erfindung ein mehrkomponentiges Befestigungsmörtelsystem umfassend eine Epoxidharzkomponente (A), enthaltend wenigstens ein härtbares Epoxidharz und wenigstens eine trifunktionelle Epoxidverbindung als Reaktivverdünner, und eine Härterkomponente (B) enthaltend wenigstens ein gegenüber Epoxidgruppen reaktives Amin, wobei die trifunktionelle Epoxidverbindung unter Verbindungen mit einem Epoxidäquivalenzgewicht (EEW) von kleiner 130 g/eq ausgewählt ist.

Die trifunktionelle Epoxidverbindung sollte, um als Reaktivverdünner zu wirken, eine Viskosität von weniger als 2000 mPas aufweisen, bevorzugt von weniger als 1000 mPas und besonders bevorzugt von weniger als 800 mPas.

*Härtbares Epoxidharz*

Die Epoxidharzkomponente (A) (Komponente (A)) des mehrkomponentiges Befestigungsmörtelsystems der Erfindung umfasst mindestens ein Reaktiv-Kunstharz auf Epoxidharzbasis.

Als härtbares Epoxidharz zur Verwendung in Komponente (A) der vorliegenden Erfindung kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen,

insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen.

Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

In einer weiteren bevorzugten Ausführungsform ist das mindestens eine härtbare Epoxidharz ein Epoxidharz, das aus nachwachsenden Quellen hergestellt wurde. Derartige Epoxidharze aus nachwachsenden Quellen sind beispielsweise Isosorbid-diglycidylether (CAS 13374-44-2), Limonen-1,2:8,9-dioxid (LDO, CAS 96-08-2), Vanillin-diglycidylether (DGEVA, CAS 1584677-14-4), Phloroglycinol-triglycidylether (PTHE, CAS 4223-14-7), Vanillinsäure-bisepoxid (CAS 1393710-63-8), und epoxidiertes Pflanzenöl, wie z. B. epoxidiertes Rizinusöl (CAS 105839-17-6, kommerziell erhältlich als Erisys GE 35-H von Huntsman, Belgien) und epoxidiertes Cardanolöl (Mischung enthaltend u.a. CAS 1260636-34-7 und CAS 63284-28-6). Neben Erisys GE 35-H sind Beispiele für kommerziell in größeren Mengen erhältliche bio-basierte Polyepoxide, die im Rahmen der Erfindung eingesetzt werden können, auch Erisys GE 60 und GE 61 (Epoxidharz auf Basis von Sorbitol; Huntsman, Belgien) sowie Araldite DY-S (Epoxidharz auf Basis von Polyglycerin; Huntsman, Belgien).

Geeignete Epoxidharze sind auch in dem Standardwerk von Michael Dombusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 150 bis 300 g/EQ verwendet.

Ein bevorzugtes Beispiel für ein kommerziell erhältliches Bisphenol F-basiertes Epoxidharz, enthaltend Bisphenol-F-diglycidylether, ist Araldite GY 282. Ein Beispiel für ein kommerziell erhältliches Bisphenol A-basiertes Epoxidharz, enthaltend Bisphenol-A-diglycidylether, ist Araldite GY 240.

Der Anteil an Epoxidharz an der Epoxidharzkomponente (A) beträgt >0 bis 95 Gew.-%, bevorzugt 10 bis 70 Gew.-% und besonders bevorzugt 30 bis 60 Gew.-%, bezogen auf das Gesamtgewicht der Epoxidharzkomponente (A).

Der Anteil an trifunktioneller Epoxidverbindung mit einem Epoxidäquivalenzgewicht (EEW) von kleiner 130 g/eq liegt bevorzugt in einer Menge von etwa 5 bis etwa 30 Gew.-% vor, weiter bevorzugt von 5 bis 20 Gew.-% und noch weiter bevorzugt von 10 bis 20 Gew.-%, jeweils bezogen auf das Gesamtgewicht der Epoxidharzkomponente (A).

Der Anteil der Epoxidharzkomponente (A) an der Gesamtmasse des mehrkomponentigen Epoxidharzsystems beträgt vorzugsweise 5 bis 90 Gew.-%, insbesondere 20 bis 80 Gew.-%, 30 bis 70 Gew.-% oder 40 bis 60 Gew.-%.

Härterkomponente (B)

Die Härterkomponente (B) des mehrkomponentiges Befestigungsmörtelsystems umfasst mindestens einen Härter. Der Härter beinhaltet mindestens eine zur Epoxidhärtung gebräuchliche Verbindung (Reaktionspartner bei der Polyaddition). Der Begriff "*Härter*" bedeutet dabei vorzugsweise mindestens eine zur Epoxidhärtung gebräuchliche Verbindung mit oder ohne Füllstoffzusatz und/oder weitere Zusätze, wie Wasser, Verdickungsmittel und/oder weitere Zusatzstoffe, mit anderen Worten, die komplette Härterkomponente. Übliche Zusätze können zugesetzt sein, wie z.B. Füllstoffe, wie bereits vorstehend im Zusammenhang mit Komponente (A) beschrieben, und/oder (insbesondere zur Herstellung einer Paste oder Emulsion) Lösungsmittel, wie Benzylalkohol und/oder Wasser, wobei Wasser als Reaktionspartner für die Hydrolyse von hydrolysierbare Gruppen beinhaltenden Silane oder Siloxanen dienen kann und vorzugsweise nur enthalten ist, wenn die Härterkomponente (B) ansonsten frei von Silanen oder Siloxanen ist. Die weiteren Zusätze der Härterkomponente eines erfindungsgemäßen Befestigungsmörtelsystems auf Epoxidbasis können beispielsweise in einem Gewichtanteil von insgesamt 0,01 bis 70 Gew.-%, z.B. von 1 bis 40 Gew.-% bezogen auf die Härterkomponente (B) vorgesehen sein.

Bei den zur Epoxidhärtung gebräuchlichen Verbindungen (die als Reaktionspartner bei der Polyaddition fungieren) handelt es sich insbesondere um solche mit zwei oder mehr Gruppen, ausgewählt aus Amino, Imino, und Mercapto, beispielsweise entsprechende Amine, Thiole, oder Aminothiole, oder Gemische davon, beispielsweise wie in Lee Hand Neville K, "Handbook of Epoxy Resins" (New. York: McGraw-Hill), 1982, genannt.

Die zur Epoxidhärtung (allgemein) gebräuchlichen Verbindungen umfassen beispielsweise in einer Ausführungsform der Erfindung Di- oder Polyamine wie insbesondere aliphatische, heteroaliphatische, cycloaliphatische, cycloheteroaliphatische und aromatische Di- oder Polyamine, Amidoamine, Aminaddukte (z.B.: Bucherer-Addukte

wie in der Druckschrift EP 0 824 124 offenbart), Polyetherdiamine, Polyphenyl/Polymethylen-polyamine oder Mannichbasen.

Gemäß der vorliegenden Erfindung werden bevorzugt Diamine, Polyamine oder Mannichbasen in der Härterkomponente (B) verwendet.

Beispiele für besonders geeignete Di- oder Polyamine sind 1,2-Diaminoethan (Ethylendiamin), 1,2-Propandiamin, 1,3-Propandiamin, 1,4-Diaminobutan, 2,2-Dimethyl-1, 3-propandiamin (Neopentandiamin), Diethylaminopropylamin (DEAPA), 2-Methyl-1,5-pentamethylendiamin (Dytek A), 1,3-Diaminopentan, 2,2,4- oder 2,4,4-Trimethyl-1, 6-diaminohexan und Gemische davon (TMD), 1,2-Bis(aminomethyl)cyclohexan, Hexamethylendiamin (HMD), 1,4-Diaminocyclohexan (1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, 3-Aminomethyl-3,5,5-trimethylcyclohexan (IPDA), 1,3-Cyclohexandimethanamin (1,3-BAC), Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.02,6]decan (Isomerengemisch, tricyclischer primärer Amine; TCD-Diamin), Methylcyclohexyl-diamin (Baxxodur EC 210, MDACH), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin. Bevorzugte Polyamine sind mXDA, Dytek A, TMD, IPDA, 1,3-BAC und MDACH.

Bei den erfindungsgemäß einzusetzenden Mannichbasen handelt es sich um die Reaktionsprodukte von Phenolen, wie Phenol, Brenzcatechin, Resorcin, Hydrochinon, Hydroxyhydrochinon, Phloroglucin, Pyrogallol, o-Kresol, m-Kresol, p-Kresol, oder Bisphenolen, wie Bisphenol F oder Bisphenol A, insbesondere Phenol, oder von styrolisierten Phenolen, wie nachfolgend definiert, mit den vorstehend definierten Di- oder Polyaminen und Aldehyden oder durch Zersetzung Aldehyde liefernde Verbindungen, vor allem aliphatischen Aldehyden, wie insbesondere Formaldehyd (wobei dieser Begriff auch und durch Zersetzung Formaldehyd liefernde Verbindungen wie Trioxan oder Paraformaldehyd einschließen kann), wobei die Aldehyde vorteilhaft als wässrige Lösung (insbesondere bei erhöhter Temperatur, wie bei 50 bis 90 °C) zu- und umgesetzt werden.

Die Herstellung der Mannichbasen kann erfindungsgemäß nach an sich bekannten Verfahren erfolgen, unter Verwendung der oben definierten geeigneten Amine. Beispielsweise kann sie, z.B. unter Verwendung der genannten Amine, wie folgt durchgeführt werden (die konkreten Angaben (gekennzeichnet durch "*z.B.*" und "*beispielsweise*") beziehen sich auf die in den Beispielen verwendeten Mannichbasen):
Ein Amin (z.B. 2 mol) wird (beispielsweise in einem 250 ml-Dreihalskolben, welcher mit einem Thermometer, einem Tropftrichter und einer Rührvorrichtung versehen ist) vorgelegt. Unter Rühren wird das vorgelegte Amin mit (z.B. 1 mol) Phenol bzw. styrolisiertem Phenol versetzt. Es wird aufgeheizt (z.B. auf 80 °C). Bei der erreichten Temperatur wird (z.B. innerhalb 45 min) Formaldehyd zugetropft (z.B. 0,7 mol als 37%ige Formaldehydlösung), insbesondere unter starkem Rühren. Nach Ende der Zugabe wird weiter aufgeheizt (beispielsweise auf 105 °C) und die Reaktionsbedingungen für einige Zeit (z.B. 120 min) gehalten. Anschließend wird - beispielsweise unter steigendem Vakuum - bei geeigneter Temperatur (z.B. ca. 110 °C) Wasser abdestilliert, wobei, sobald der Druck stark genug vermindert ist (z.B. auf 50 mbar), die Temperatur weiter erhöht wird (z.B. auf 130 °C) und dann eine Zeitlang (z.B. 60 min) gehalten wird.

Der Anteil aller gegenüber Epoxidgruppen reaktiven Amine (Diamine, Polyamine oder Mannichbasen) in der Härterzusammensetzung (B) beträgt vorzugsweise von 30 bis 98 Gew.-%, bevorzugt von 40 bis 80 Gew.-%, bezogen auf das Gesamtgewicht der Härterzusammensetzung (B).

In einer vorteilhaften Ausführungsform weist die Härterkomponente (B) einen AHEW (Amine Hydrogen Equivalent Weight) von 20 bis 1000 g/EQ auf, bevorzugt von 30 bis 500 g/EQ, bevorzugter von 40 bis 350 g/EQ, noch bevorzugter von 50 bis 225 g/EQ und besonders bevorzugt von 50 bis 150 g/EQ.

Für ein einfaches Amin sei die Errechnung des AHEW am Beispiel von meta-Xylylendiamin rein exemplarisch erläutert:

Allgemeine Formel: $$\text{H-Äq.} = \frac{Mw}{Funktionalität}$$

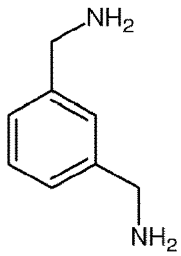

$$\text{eingesetzt: H-Äq.} = \frac{136}{4}\left[\frac{g}{eq}\right] = 34\left[\frac{g}{eq}\right]$$

Experimentell kann der AHEW-Wert durch Bestimmung der Glasübergangstemperatur (Tg) einer Mischung aus Epoxidharz (mit bekanntem EEW und Aminkomponente erhalten werden. Es werden dabei die Glasübergangstemperaturen von Epoxidharz/Amin-Mischungen mit unterschiedlichen Verhältnissen bestimmt. Die Probe wird mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("*Tg2*") besitzt das optimale Verhältnis von Epoxidharz und Amin. Aus dem bekannten EEW und dem optimalen Epoxidharz/Amin-Verhältnis lässt sich der AHEW-Wert ebenfalls berechnen.

Beispiel: EEW = 158 g/mol
Mischung Amin/Epoxidharz mit maximaler Tg2: 1 g Amin mit 4,65 g Epoxidharz

$$\text{AHEW (Amin)} = 1*158/4{,}65 = 33{,}9785$$

Als weiterer Bestandteil sind typischerweise Beschleuniger in der Härterkomponente (B) vorhanden. Der Anteil des zugesetzten Beschleunigers hängt vom jeweiligen Beschleuniger, von der für die Anwendung nötigen Aushärtezeit und von den eingesetzten Aminen ab. So beschleunigen Triflate am stärksten, gefolgt von Nitraten und Thiocyanaten. Iodide beschleunigen etwas schwächer. Aufgrund der starken Beschleunigungswirkung der anorganischen Salze sind Konzentrationen zwischen 1 und 10 % ausreichend, um nach 24 Stunden eine zufriedenstellende Aushärtung zu erreichen. Weitere bekannte Beschleuniger sind Novolake (einschließlich Bisphenole), styrolisiertes Phenol, para-Toluolsulfonsäure, und Salicylsäure. Diese Beschleuniger können auch kombiniert werden, bekannte Kombinationen sind z. B. Novolak und anorganisches Salz, Novolak und styrolisiertes Phenol, Bisphenol F und p-Toluolsulfonsäure oder styrolisiertes Phenol und Salicylsäure.

Ein Polyphenol (Novolak) wird dargestellt durch die allgemeine Formel (I) oder ein Copolymer verschiedener Alkylphenol- oder Aralkylphenol-Einheiten,

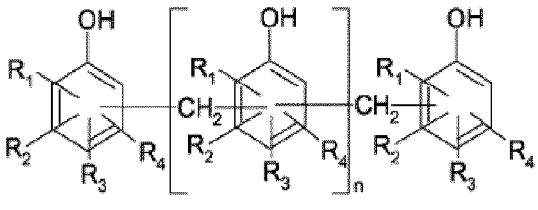
(I)

,

wobei in Formel (I) $R_1$, $R_2$, $R_3$, $R_4$, jeweils unabhängig voneinander H, verzweigte oder unverzweigte Alkyl-Radikale, oder verzweigte oder unverzweigte Aralkyl-Radikale, enthaltend 1 bis 15 Kohlenstoffatome, darstellen; n beträgt 0 bis 15.

Bevorzugte Novolakharze sind solche, bei denen in Formel (I) $R_1$, $R_2$, $R_3$ und $R_4$ entweder Wasserstoff sind, oder eines oder zwei der Radikale $R_1$ bis $R_4$ das Radikal $CH_3$ ist/sind, oder eines der Radikale $R_1$ bis $R_4$ das tert.-Butylradikal oder ein unverzweigtes oder verzweigtes $C_1$-$C_{15}$-Alkylradikal ist. Bevorzugte Novolakharze sind weiterhin solche mit n zwischen 1 und 15.

Als Co-Beschleuniger kann die Härterkomponente (B) außerdem 2,4,6-Tris(dimethylaminomethyl)phenol (z. B. Ancamine K54, Air Products, NL) oder Benzylalkohol enthalten.

Ferner können in der Härterkomponente (B) Füllstoffe und Thixotropiermittel, wie bereits vorstehend im Zusammenhang mit der Epoxidharzkomponente (A) beschrieben, vorhanden sein.

Weitere Bestandteile des mehrkomponentigen Befestigungsmörtelsystems

Sowohl die Epoxidharzkomponente (A), als auch die Härterkomponente (B), als auch beide Komponenten (A) und (B) umfassen typischerweise neben dem härtbaren Epoxidharz bzw. dem Härtungsmittel mindestens einen weiteren Bestandteil. Weitere übliche Bestandteile sind insbesondere Füllstoffe, Rheologieadditive (Thixotropiermittel), Haftvermittler und Lösemittel.

Je nach gewünschter Wirkung eines weiteren Bestandteils kann es bevorzugt sein, dass der mindestens eine weitere Bestandteil nur in der Epoxidharzkomponente (A), nur in der Härterkomponente (B), oder in beiden Komponenten enthalten ist.

Durch den Einsatz eines Haftvermittlers wird die Vernetzung der Bohrlochwand mit der Mörtelmasse verbessert, so dass sich die Haftung im ausgehärteten Zustand erhöht.

Geeignete Haftvermittler für die Epoxidharzkomponente (A) sind aus der Gruppe der Silane ausgewählt, die mindestens eine Si-gebundene hydrolisierbare Gruppe aufweisen, wie beispielsweise 3-Glycidyloxypropyltrialkoxysilan, wie 3-Glycidyloxypropyltrimethoxysilan (GLYMO) oder -ethoxysilan, Glycidyloxymethyltrialkoxysilan, wie Glycidyloxymethyltrimethoxysilan oder Glycidyloxymethyltriethoxysilan, 3-Glycidyloxypropylmethyldi-alkoxysilan, wie 3-Glycidyloxypropylmethyldi-methoxysilan oder 3-Glycidyloxypropylmethyldi-ethoxysilan, 2-(3,4-Epoxycyclohexyl)ethyltrimethoxysilan und/oder Tetraalkoxysilan, wie Tetramethoxysilan, Tetraethoxysilan oder Tetrapropoxysilan, oder einem Gemisch von zwei oder mehreren davon. Besonders bevorzugt als Silan (S) ist beispielsweise 3-Glycidyloxypropyltrimethoxysilan, z.B. Dynasylan GLYMO von Evonik Industries, Deutschland.

Der Haftvermittler kann in einer Menge bis zu 6 Gew.-%, bevorzugt 0,1 bis 4 Gew.-%, weiter bevorzugt 2,0 bis 3,5 Gew.-% bezogen auf das Gesamtgewicht der Härterkomponente (A) enthalten sein.

Geeignete Haftvermittler für die Härterkomponente (B) sind aus der Gruppe der Silane ausgewählt, die mindestens eine Si-gebundene hydrolisierbare Gruppe aufweisen, wie beispielsweise, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyltrimethoxysilan (AMMO), 3-Aminopropyltriethoxysilan (AMEO), 2-Aminoethyl-3-aminopropyltrimethoxysilan (DAMO) und Trimethoxysilylpropyldiethylentetramin (TRIAMO) bevorzugt. Weitere Silane sind beispielsweise in der EP3000792 A1 beschrieben.

Der Haftvermittler kann in einer Menge bis zu 10 Gew.-%, bevorzugt 0,1 bis 8 Gew.-%, weiter bevorzugt 2,0 bis 6 Gew.-% bezogen auf das Gesamtgewicht der Härterkomponente (B) enthalten sein.

Des Weiteren können die Epoxidharzkomponente (A) und die Härterkomponente (B) übliche Zusätze enthalten, insbesondere Füllstoffe oder Thixotropiermittel (Verdicker).

Als Füllstoffe dienen bevorzugt anorganische Füllstoffe, insbesondere Quarz, Aluminiumoxide, Glas, Korund, Porzellan, Steingut, Schwerspat, Leichtspat, Gips, Talkum, Zemente (wie Portlandzement oder Aluminatzement), und/oder Kreide sowie deren Mischungen. Die anorganischen Füllstoffe können in Form von Partikeln (beispielsweise in Form von Pulvern, Sanden, oder Mehlen) oder Formkörpern (letzteres vorzugsweise in Form von Fasern oder Kugeln), zugesetzt werden. Durch eine geeignete Auswahl der Füllstoffe hinsichtlich Art und Partikelgrößenverteilung, Partikelgröße oder (Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Als Füllstoffe kommen insbesondere nicht oberflächenbehandelte Quarzmehle, Feinquarzmehle und Feinstquarzmehle, wie beispielsweise Millisil® W3, Millisil® W6, Millisil® W8 und Millisil® W12, bevorzugt Millisil® W12, in Frage. Ferner können silanisierte Quarzmehle, Feinquarzmehle und Feinstquarzmehl eingesetzt werden. Diese sind beispielsweise käuflich als Produktserie Silbond der Firma Quarzwerke erhältlich. Hierbei sind die Produktserien Silbond® EST (Epoxysilan-behandelt) und Silbond® AST 25 (Aminosilan-behandelt) besonders bevorzugt. Ferner können Aluminiumoxid-basierte Füllstoffe wie beispielsweise Aluminiumoxidfeinstfüller vom Typ ASFP der Firma Denka, Japan, ($d_{50}$ = 0,3 μm) oder Qualitäten wie DAW oder DAM mit den Typenbezeichnungen 45 ($d_{50}$ < 0,44 μm), 07 ($d_{50}$ > 8,4 μm), 05 ($d_{50}$ < 5,5 μm), 03 ($d_{50}$ < 4,1 μm) eingesetzt werden. Weiterhin können die oberflächenbehandelten Fein- und Feinstfüllstoffe vom Typ Aktisil AM 30 (Aminosilan-behandelt, $d_{50}$ = 2,2 μm) und Aktisil EM (Epoxysilan-behandelt, $d_{50}$=2,2 μm) von Hoffman Mineral verwendet werden. Die Füllstoffe können einzeln oder auch in beliebiger Mischung untereinander verwendet werden. Besonders bevorzugt ist nicht oberflächenbehandeltes Quarzmehl, insbesondere Millisil® W12.

Als Füllstoffe können insbesondere nicht oberflächenbehandelte Quarzmehle und/oder Tonerde eingesetzt werden. Bevorzugt sind Füllstoffe mit einem Mittelkorn $d_{50}$ von <50 μm, besonders bevorzugt Füllstoffe mit einem Mittelkorn $d_{50}$ von <20 μm.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 60 Gew.-%, noch weiter bevorzugt 30 bis 55 Gew.-%, bezogen auf das Gesamtgewicht der Epoxidharzkomponente (A) bzw. der Härterkomponente (B).

Weitere denkbare Zusätze zur Epoxidharzkomponente (A) und der Härterkomponente (B) sind ferner Thixotropiermittel, wie gegebenenfalls organisch nachbehandelte pyrogene Kieselsäure, Bentonite, Cellulose, Alkyl- und

Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Ferner können Lösemittel in dem Zwei-Komponenten-Harzsystem eingesetzt werden, um beispielsweise Aushärtezeiten gezielt zu verlangsamen oder die Gelzeit zu verändern. Bevorzugte Lösemittel können einwertige, zweiwertige oder mehrwertige Alkohole umfassen, bevorzugt einen zweiwertigen Alkohol. Unter einem mehrwertigen Alkohol wird hier ein drei- oder höherwertiger Alkohol verstanden. Stark bevorzugt kann die Komponenten (A) oder (B) einen zweiwertigen Alkohol, insbesondere Dipropylenglycol, umfassen. Alternativ stark bevorzugt kann die Komponente (A) oder (B) Benzylalkohol umfassen.

Zur Optimierung können weiterhin Netz- und Dispergiermittel, Phlegmatisiermittel, Oberflächenadditive, Weichmacher wie Phthalsäure- oder Sebacinsäureester, Wachsadditive, Stabilisatoren, Antistatikmittel, Flexibilisatoren, Härtungskatalysatoren, weitere Steuerungsmittel für die Reaktionsgeschwindigkeit, Entschäumer & Entlüfter, Viskositätsreduzierer oder sonstige Prozessadditive zugesetzt werden.

Ebenso denkbar sind färbende Zusätze wie Farbstoffe oder Pigmente, beispielsweise zum unterschiedlichen Anfärben der Komponenten zur besseren Kontrolle von deren Durchmischung.

Verwendung

Unter einem mehrkomponentigen Befestigungsmörtelsystems ist insbesondere ein Kit mit zwei oder mehreren Komponenten zu verstehen (vorzugsweise ein 2K-System) mit einer Komponente (A), welche ein oder mehrere Reaktiv-Kunstharze sowie einen Reaktivverdünner auf Epoxidharzbasis beinhaltet, wie nachstehend weiter beschrieben, und Härter (Komponente (B)), wobei zusätzlich weitere Zusätze in einer oder beider der Komponenten vorgesehen sein können, worin die miteinander reaktionsfähigen Komponenten (A) und (B) und ggf. weitere separate Komponenten so enthalten sind, dass sie während der Lagerung nicht miteinander reagieren können, vorzugsweise so, dass sie vor der Anwendung nicht miteinander in Berührung kommen, die es jedoch ermöglicht, die Komponenten (A) und (B) und gegebenenfalls weitere Komponenten zur Befestigung an der gewünschten Stelle, beispielsweise direkt vor oder in einem Loch oder Spalt, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder bevorzugt Zweikomponentenkartuschen, in deren Kammern die vorzugsweise zwei Komponenten (insbesondere Komponenten (A) und (B)) des erfindungsgemäßen Befestigungsmörtels zur Aufbewahrung vor der Nutzung enthalten sind, wobei vorzugsweise auch ein Statikmischer zum entsprechenden Kit gehören kann. Die Verwendung eines erfindungsgemäßen Befestigungsmörtels am gewünschten Einsatzort erfolgt dann durch Mischen der zugehörigen Komponenten.

Die Komponenten (A) und (B) werden bevorzugt in einem Verhältnis gemischt, das entsprechend der EEW- und AHEW-Werte eine ausgeglichene Stöchiometrie ergibt. Zur bestimmungsgemäßen Anwendung des mehrkomponentigen Befestigungsmörtelsystems werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxidharzen der Harzkomponente (A) unter Polyaddition, sodass die Epoxidharzmasse unter Umgebungsbedingungen innerhalb einer gewünschten Zeit aushärtet.

Das erfindungsgemäße mehrkomponentige Befestigungsmörtelsystem wird bevorzugt für Bauzwecke eingesetzt. Der Begriff "*für Bauzwecke*" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Ganz besonders bevorzugt dienen die erfindungsgemäßen mehrkomponentigen Befestigungsmörtelsysteme zur chemischen Befestigung von Verankerungselementen in einem Loch oder Spalt in einem Bausubstrat.

Die Erfindung betrifft ferner ein Verfahren zur Befestigung von einem Verankerungselement in einem Loch oder Spalt in einem Bausubstrat, bei dem ein mehrkomponentiges Befestigungsmörtelsystem wie vorstehend definiert und ein Verankerungselement in das Loch oder den Spalt eingebracht und aushärten gelassen werden.

Ferner betrifft die vorliegende Erfindung die Verwendung einer Kombination von (i) mindestens einem Epoxidharz aus der Gruppe Bisphenyl-A-diglycidylether, Bisphenol-F-diglycidylether und Novolak-Epoxidharz und (ii) einem trifunktionellen Reaktivverdünner ausgewählt aus Trimethylolpropantriglycidylether (TMPTGE) und Trimethylolethantriglycidylether (TMETGE) oder einer Mischung aus diesen mit jeweils einem Epoxidäquivalentgewicht von kleiner als 130 g/eq als Epoxidharzmischung in einer Komponente eines mehrkomponentigen Befestigungsmörtelsystems zum Erhöhen der Verbundspannung insbesondere bei erhöhter Temperatur.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## AUSFÜHRUNGSBEISPIELE

Alle in den Tabellen 1, 2 und 3 aufgelisteten Chemikalien und Bestandteile der Zusammensetzungen sind kommerziell erhältlich und wurden in der kommerziell üblichen Qualität eingesetzt, soweit nicht anders angegeben.

Die Bestimmung der Epoxid-Äquivalentgewichts-Werte (EEW; epoxy equivalent weight, d.h. der Menge Harz in g, die 1 Mol Epoxidgruppen enthält) und Aminwasserstoff-Äquivalentgewichts-Werte (AHEW; amine hydrogen equivalent weight, d.h. der Menge Amin in g, die 1 mol reaktives H enthält) in den nachstehenden Beispielen erfolgt in für den Fachmann bekannter Weise anhand der Formulierung der Reaktionsmischung aus den bekannten H-Äquivalenten der verwendeten Edukte und Rohstoffe, aus denen sie errechnet werden. Die EEW-Werte sind in der Regel auf den Ausgangsmaterialien von den Herstellern angegeben oder sie werden nach bekannten Methoden ermittelt bzw. berechnet.

**Tabelle 1:** eingesetzte Chemikalien

| Stoff | Funktion | Handelsname | Hersteller |
|---|---|---|---|
| Quarzmehl | Füllstoff | Millisil® W1 2 | Quarzwerke Frechen, D |
| Kieselsäure | j Verdicker | Cab-O-Sil® TS-720 | Cabot Rheinfelden, D |
| Kieselsäure | Verdicker | Aerosil® R 805 | Evonik, D |
| Cellulose | Verdicker | Jelucel HM 30 | Jelu-Werk, D |
| 2,4,6-Tris-(dimethylaminomethyl) phenol | Beschleuniger | Ancamine K54 | Evonik, D |
| Calciumnitrat-Tetrahydrat | Beschleuniger | Calciumnitrat-Tetrahydrat | Sigma Aldrich, D |
| 1,2,3-Propantriol | Lösungsmittel | Glycerin | Merck, D |

**Tabelle 2:** Eingesetzte Epoxide

| **Handelsname** | **Chem. Name** | **Abkürzung** | **Hersteller** | **EEW [g/eq]** | **Viskosität [mPas], 25°C** | **Dichte [g/cm$^3$], 25°C** |
|---|---|---|---|---|---|---|
| Araldite® GY 250 | Bispenol-A-diglycidylether | BADGE | Huntsman | 187 | 10.000-12.000 | 1,16 |
| Araldite® GY 282 | Bisphenol-F-diglycidylether | BFDGE | Huntsman | 168 | 3.300- 4.100 | 1,19 |
| Araldite® DY-T | Trimethylolpropantriglycidylether | TMPTGE | Huntsman | 125 | 100 - 300 | 1,12 |
| Grilonit® V 51-31 | Trimethylolpropantriglycidylether | TMPTGE | EMS-Griltech | 135 | 105 | 1,14 |
| Araldite® DY-31 | Trimethylolethantriglycidylether | TMETGE | Huntsman | 120 | 200 - 400 | 1,20 |
| Erisys® GY-31 | Trimethylolethantriglycidylether | TMETGE | Huntsman | 160 | 200 - 300 | 1,15 |
| Araldite® DY-026 | 1,4-Butandioldiglycidylether | BDDGE | Huntsman | 112 | 11-15 | 1,08 |

**Tabelle 3:** Eingesetzte Amine

| Handelsname | Chem. Name | Abkürzung | Hersteller | AHEW [g/eq] | Dichte [g/cm³], 25°C |
|---|---|---|---|---|---|
| mXDA | m-Xylylendiamin | mXDA | Mitsubishi Gas Chemial | 34,0 | 1,03 |
| Vestamin TMD | 2,2,4- und 2,4,4-Trimethylhexamethylendiamin | TMD | Evonik | 39,6 | 0,87 |
| Vestamin IPD | 3-Aminomethyl-3,5,5-trimethylcyclohexylamin | IPDA | | 42,6 | 0,92 |

**Bestimmung von Glasübergangstemperaturen von Mischungen aus Epoxidharz und trifunktioneller Epoxidverbindung mit einem Epoxidäquivalenzgewicht (EEW) von kleiner 130 g/eq**

**Tabelle 4:** Epoxidharzmischungen, Zusammensetzung in Gew.%

| | **Vergleich 1** | **Vergleich 2** | **Vergleich 3** | **Vergleich 4** | **Beispiel 1** | **Beispiel 2** | **Beispiel 3** | **Beispiel 4** |
|---|---|---|---|---|---|---|---|---|
| Araldite® GY 250 | 54 | 54 | 55 | 55 | 54 | 54 | 68 | 68 |
| Araldite® GY 282 | 21 | 21 | 22 | 22 | 21 | 21 | 27 | 27 |
| Araldite® DY-026 | | | 13 | 13 | | | | |
| Erisys® GY 31 | 25 | | | | | | | |
| Grilonit® V 51-31 | | 25 | | | | | | |
| Araldite® DY-31 | | | 10 | | 25 | | 5 | |
| Araldite® DY-T | | | | 10 | | 25 | | 5 |
| | | | | | | | | |
| | **Beispiel 5** | **Beispiel 6** | **Beispiel 7** | **Beispiel 8** | **Beispiel 9** | | **Beispiel 10** | |
| Araldite® GY 250 | 64 | 64 | 61 | 61 | 50 | | 50 | |
| Araldite® GY 282 | 26 | 26 | 24 | 24 | 20 | | 20 | |
| Araldite® DY-026 | | | | | | | | |
| Erisys® GY 31 | | | | | | | | |
| Grilonit® V 51-31 | | | | | | | | |
| Araldite® DY-31 | 10 | | 15 | | 30 | | | |

(fortgesetzt)

| | Beispiel 5 | Beispiel 6 | Beispiel 7 | Beispiel 8 | Beispiel 9 | Beispiel 10 |
|---|---|---|---|---|---|---|
| Araldite® DY-T | | 10 | | 15 | | 30 |
| | | | | | | |

Zur Herstellung der Epoxidharzmischungen in Tabelle 4 wurden die jeweiligen Komponenten in eine Kunststoffdose gegeben und im Speedmixer für 30 sec bei 1500 rpm gemischt.

Die Glasübergangstemperaturen (Tg2) der Epoxidharzmischungen aus Tabelle 4 wurden wie folgt bestimmt: Die Epoxidharzkomponente aus Tabelle 4 wurde mit dem jeweiligen Amin aus Tabelle 5 in einem Verhältnis eingewogen, aus dem sich eine Stöchiometrie von 1:1 ergibt (basierend auf den für die Rohstoffe angegebenen EEW und AHEW in Tabelle 2 und 3). Beide wurden im Speedmixer bei 1500 rpm für 60 sec gemischt. Die Proben wurden zur Aushärtung in eine Silikonform überführt, so dass sich Proben mit 1 mm Dicke ergaben. Nach Aushärtung für 24 Stunden bei 23°C und 50%rH wurden in 7 mg schwere Teile gestanzt und im DSC-Tiegel platziert.

In der DSC wurde die Probe mit einer Rate von -10,0 K/min auf -20,0°C gekühlt und bei dieser Temperatur für 2 min gehalten. Anschließend erfolgte ein Aufheizen bis auf 200,0°C mit einer Heizrate von 10,0 K/min und anschließendem Halten der Temperatur für 1 min. Die Probe wurde dann mit einer Rate von -10,0 K/min auf 25,0°C abgekühlt und dort für 2 min gehalten. Im zweiten Heizlauf erfolgte das Heizen auf 200,0°C ebenfalls mit einer Rate von 10,0 K/min. Die angegebenen Glasübergangstemperaturen (Tg2) wurden im zweiten Heizlauf bestimmt.

**Tabelle 5:** Glasübergangstemperaturen (Tg2 in °C)

| | mXDA | TMD | IPDA |
|---|---|---|---|
| Vergleich 1 | 74 | 72 | 113 |
| Vergleich 2 | 84 | 69 | 102 |
| Vergleich 3 | | | 120 |
| Vergleich 4 | | | 116 |
| Beispiel 1 | 100 | 81 | 134 |
| Beispiel 2 | 95 | 79 | 128 |
| Beispiel 3 | | | 145 |
| Beispiel 4 | | | 148 |
| Beispiel 5 | | | 136 |
| Beispiel 6 | | | 136 |
| Beispiel 7 | | | 133 |
| Beispiel 8 | | | 131 |
| Beispiel 9 | | | 134 |
| Beispiel 10 | | | 127 |

**Herstellung der mehrkomponentigen Befestigungsmörtelsysteme**

Herstellung der Calciumnitrat-Tetrahydrat-Lösung:

Calciumnitrat-Tetrahydrat wurde zu Glycerin gegeben und bis zur vollständigen Lösung gerührt. Die so hergestellte Lösung enthielt 80,0 % Calciumnitrat-Tetrahydrat.

Die Lösung wird in einigen der nachstehenden Beispiele als Beschleuniger eingesetzt.

**Tabelle 6:** Komponente (A), Zusammensetzung in Gew.%

| | **Vergleich 5** | **Beispiel 11** | **Beispiel 12** |
|---|---|---|---|
| BADGE | 31,6 | 31,6 | 31,6 |
| BFDGE | 12,3 | 12,3 | 12,3 |
| Grilonit V 51-31 | 14,6 | | |
| Araldite DY-31 | | 14,6 | |
| Araldite DY-T | | | 14,6 |
| Quarzmehl | 40,0 | 40,0 | 40,0 |
| Kieselsäure Cab-O-Sil TS-720 | 1,5 | 1,5 | 1,5 |
| *EEW in g/eq* | *285* | *279* | *275* |

**Tabelle 7:** Komponente (B), Zusammensetzung in Gew.%

| | Vergleich 5, Beispiel 11 und 12 |
|---|---|
| TMD | 41,0 |
| Ancamine K54 | 3,0 |
| Quarzmehl | 46,0 |
| Kieselsäure Aerosil R 805 | 6,0 |
| Cellulose | 3,0 |
| Calciumnitrat-Tetrahydrat-Lösung | 1,0 |
| *AHEW in g/eq* | *97* |

Die Komponenten A und B aus den Tabellen 6 und 7 werden mit einer Stöchiometrie von 1:1 (basierend auf EEW und AHEW) eingewogen und in einem Speedmixer (Hauschild DAC 800) vermischt. Anschließend wird die so erhaltene Mörtelmasse in eine 1K-Kartusche abgefüllt und ins Bohrloch injiziert.

Für Auszugsversuche mit Gewindestangen M12 wird, gemäß EAD 330499-00-0601, wie folgt vorgegangen: Zunächst werden Bohrlöcher (Durchmesser 14 mm; Tiefe ca. 62 mm) in einen horizontal liegenden Betonprüfkörper (Festigkeitsklasse C20/25) mit einem Hammerbohrer eingebracht. Die Bohrlöcher werden gereinigt. Die Anzahl und Art der jeweiligen Reinigungsschritte richtet sich nach der Versuchsart (s. dort). Anschließend werden die Bohrlöcher vom Bohrgrund her mit der jeweiligen zu prüfenden härtbaren Masse für Befestigungszwecke zu zwei Dritteln befüllt. Je Bohrloch wird eine Gewindestange von Hand eingedrückt. Der Mörtelüberschuss wird mittels eines Spachtels entfernt. Nach der für den jeweiligen Versuch angegebenen Zeit und Temperatur wird die Gewindestange gezogen bis zum Versagen unter Messung der Versagenslast.

Die Versuchsbedingungen waren wie folgt:

**R1**

Trockener Beton; hammergebohrt
Reinigung: 2x Ausblasen (Druckluft) 6 bar, 2x Bürsten, 2x Ausblasen (Druckluft 6 bar)
Einbindetiefe: 60 mm
Aushärtung: 24 h bei 23°C
Abstützung: eng

**B3 80°C**

Trockener Beton; hammergebohrt
Reinigung: 2x Ausblasen (Druckluft) 6 bar, 2x Bürsten, 2x Ausblasen (Druckluft 6 bar)

Einbindetiefe: 60 mm
Aushärtung: 24 h bei 23°C, dann 48 h bei 80°C
Auszüge bei 80°C
Abstützung: eng

**Tabelle 8:** Ergebnisse der Auszugsversuche und der Tg2-Messung

| | **R1 in N/mm2** | **B3 80°C in N/mm2** | **Tg2 in °C** |
|---|---|---|---|
| **Vergleich 5** | 29,2 | 15,1 | 69 |
| **Beispiel 11** | 27,8 | 19,5 | 81 |
| **Beispiel 12** | 27,7 | 19,3 | 79 |

## Patentansprüche

1. Verwendung von mindestens einer trifunktionellen Epoxidverbindung mit einem Epoxidäquivalenzgewicht (EEW) von kleiner 130 g/eq, um die Versagenslast eines ausgehärteten chemischen Dübels bei einer Untergrundtemperatur von etwa 30°C bis etwa 90°C im Vergleich zu einem chemischen Dübel mit einen trifunktionellen Epoxidverbindung ähnlicher Viskosität und mit einem Epoxidäquivalenzgewicht (EEW) von größer oder gleich 130 g/eq,
wobei der ausgehärtete chemische Dübel durch Vermischen der Komponenten (A) und (B) eines mehrkomponentigen Befestigungsmörtelsystems und anschließendes Aushärten hergestellt wurde, wobei das mehrkomponentige Befestigungsmörtelsystem aus:

   einer Epoxidharzkomponente (A) umfassend mindestens ein härtbares Epoxidharz und die trifunktionelle Epoxidverbindung mit einem Epoxidäquivalenzgewicht (EEW) von kleiner 130 g/eq als Reaktivverdünner, und
   einer Härterkomponente (B) umfassend mindestens ein gegenüber Epoxidgruppen reaktives Amin,
   besteht,
   wobei der Anteil der mindestens einen trifunktionellen Epoxidverbindung an der Epoxidharzkomponenten (A) von etwa 5 Gew.-% bis etwa 30 Gew.-% beträgt, und
   mit der Maßgabe das mehrkomponentige Befestigungsmörtelsystem keinen monofunktionellen und/oder difunktionellen Reaktivverdünner und/oder trifunktionellen Reaktivverdünner mit einem EEW von größer als oder gleich 130 g/eq in der Epoxidharzkomponente umfasst.

2. Die Verwendung gemäß Anspruch 1, wobei die Untergrundtemperatur von etwa 35°C bis etwa 85°C, bevorzugt von etwa 40°C bis etwa 80°C beträgt.

3. Die Verwendung gemäß Anspruch 1 oder 2, wobei die mindestens eine trifunktionelle Epoxidverbindung mit einem Epoxidäquivalenzgewicht (EEW) von kleiner 130 g/eq ausgewählt ist aus der Gruppe bestehend aus Trimethylolpropantriglycidylether, Trimethylolethantriglycidylether, Glycerintriglycidylether und Glycerintriglycidylether, jeweils mit einem EEW von kleiner als 130 g/eq, und einer Mischung davon.

4. Die Verwendung gemäß Anspruch 3, wobei die mindestens eine trifunktionelle Epoxidverbindung mit einem Epoxidäquivalenzgewicht (EEW) von kleiner 130 g/eq ausgewählt ist aus der Gruppe bestehend aus Trimethylolpropantriglycidylether und Trimethylolethantriglycidylether, jeweils mit einem EEW von kleiner als 130 g/eq, und einer Mischung davon ist.

5. Mehrkomponentiges Befestigungsmörtelsystem umfassend

   eine Epoxidharzkomponente (A), enthaltend wenigstens ein härtbares Epoxidharz und wenigstens eine trifunktionelle Epoxidverbindung als Reaktivverdünner, und
   eine Härterkomponente (B) enthaltend wenigstens ein gegenüber Epoxidgruppen reaktives Amin,
   wobei die trifunktionelle Epoxidverbindung unter Verbindungen mit einem Epoxidäquivalenzgewicht (EEW) von kleiner 130 g/eq ausgewählt ist,
   mit der Maßgabe, dass das mehrkomponentige Befestigungsmörtelsystem keinen monofunktionellen und/oder bifunktionellen Reaktivverdünner und/oder keinen trifunktionellen Reaktivverdünner mit einem Epoxidäquivalenzgewicht (EEW) von größer als oder gleich 130 g/eq enthält.

6. Mehrkomponentiges Befestigungsmörtelsystem nach Anspruch 5, wobei die mindestens eine trifunktionelle Epoxidverbindung in einer Menge von etwa 5 Gew.-% bis zu etwa 30 Gew.-%, bezogen auf die Epoxidharzkomponente (A), enthalten ist.

7. Mehrkomponentiges Befestigungsmörtelsystem gemäß Anspruch 5 oder 6, wobei die mindestens eine trifunktionelle Epoxidverbindung aus der Gruppe bestehend aus Trimethylolpropantriglycidylether, Trimethylolethantriglycidylether, Glycerintriglycidylether und Glycerintriglycidylether, jeweils mit einem EEW von kleiner als 130 g/eq, und einer Mischung davon ausgewählt ist.

8. Mehrkomponentiges Befestigungsmörtelsystem gemäß Anspruch 7, wobei die wenigstens eine trifunktionelle Epoxidverbindung aus der Gruppe bestehend aus Trimethylolpropantriglycidylether, Trimethylolethantriglycidylether, Glycerintriglycidylether und Glycerintriglycidylether, jeweils mit einem EEW von kleiner als 130 g/eq, und einer Mischung davon ausgewählt ist.

9. Mehrkomponentiges Befestigungsmörtelsystem gemäß irgendeinem der vorhergehenden Ansprüche 5 bis 8, wobei es sich bei dem mindestens einen härtbaren Epoxidharz um eine Verbindung ausgewählt aus der Gruppe bestehend aus Glycidylethern mehrwertiger Phenole mit einer Glycidylgruppenfunktionalität von etwa 1,5 oder größer und epoxidierten Pflanzenölen, sowie Mischungen von zwei oder mehreren davon handelt.

10. Mehrkomponentiges Befestigungsmörtelsystem gemäß Anspruch 9, wobei es sich bei dem mindestens einen härtbaren Epoxidharz um eine Verbindung ausgewählt aus der Gruppe bestehend aus Glycidylethern basierend auf Resorcin, Bisphenol A, Bisphenol F, sowie Mischungen von zwei oder mehreren davon handelt.

11. Mehrkomponentiges Befestigungsmörtelsystem gemäß irgendeinem der vorhergehenden Ansprüche 5 bis 10, wobei das mindestens eine härtbare Epoxidharz nach dem Vermischen der Komponenten (A) und (B) in etwa 30 Gew.-% bis etwa 70 Gew.-% bezogen auf das Gesamtgewicht der Komponenten (A) und (B) vorliegt.

12. Mehrkomponentiges Befestigungsmörtelsystem gemäß irgendeinem der vorhergehenden Ansprüche 5 bis 11, wobei das Zwei-Komponenten-Harzsystem zusätzlich mindestens ein Additiv und/oder einen Füllstoff umfasst, wobei das Additiv und der Füllstoff, jeweils unabhängig voneinander, entweder in Komponente (A) oder in Komponente (B) oder in beiden Komponenten (A) und (B) enthalten sind.

13. Verwendung eines mehrkomponentigen Befestigungsmörtelsystem nach einem der vorhergehenden Ansprüche 5 bis 12 als chemischer Dübel zur Befestigung eines Konstruktionselements oder Verankerungsmittels in einer Vertiefung in einem Untergrund.

14. Die Verwendung gemäß Anspruch 13 zur chemischen Befestigung eines Konstruktionselements oder Verankerungsmittels ausgewählt aus der Gruppe bestehend aus Ankerstangen, Ankerbolzen, Gewindestrangen, Gewindehülsen, Betoneisen, Bewehrungseisen und Schrauben in einem Untergrund ausgewählt aus der Gruppe bestehend aus Beton, Mauerwerk, Stahl, Keramiken, Kunststoffen, Glas, Holz, und beliebigen Kombinationen davon.

Europäisches Patentamt
European Patent Office
Office européen des brevets

# EUROPÄISCHER RECHERCHENBERICHT

Nummer der Anmeldung
EP 23 21 3222

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 109125 A1 (FISCHERWERKE GMBH & CO KG [DE]) 7. Januar 2016 (2016-01-07) | 5-14 | INV.<br>C08G59/38<br>C09J163/00<br>C04B26/14 |
| A | * Ansprüche 1-10 *<br>* Absätze [0085] - [0086]; Tabellen 1-2 *<br>----- | 1-4 | |
| A | EP 3 786 133 A1 (HILTI AG [LI])<br>3. März 2021 (2021-03-03)<br>* Ansprüche 1-14 *<br>* Beispiele *<br>----- | 1-14 | |
| A | US 2013/022748 A1 (KIM SANG YANG [KR])<br>24. Januar 2013 (2013-01-24)<br>* Ansprüche 1-21 *<br>* Beispiele *<br>----- | 1-14 | |

RECHERCHIERTE SACHGEBIETE (IPC)
C08G
C09J
C04B

Der vorliegende Recherchenbericht wurde für alle Patentansprüche erstellt

1

| Recherchenort | Abschlußdatum der Recherche | Prüfer |
|---|---|---|
| Den Haag | 14. Mai 2024 | Pouilley, Delphine |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 23 21 3222

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2024

| Im Recherchenbericht angeführtes Patentdokument | Datum der Veröffentlichung | Mitglied(er) der Patentfamilie | Datum der Veröffentlichung |
|---|---|---|---|
| DE 102015109125 A1 | 07-01-2016 | KEINE | |
| EP 3786133 A1 | 03-03-2021 | KEINE | |
| US 2013022748 A1 | 24-01-2013 | CN 102906188 A | 30-01-2013 |
| | | KR 100989942 B1 | 26-10-2010 |
| | | US 2013022748 A1 | 24-01-2013 |
| | | WO 2011136568 A2 | 03-11-2011 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1118628 A1
- EP 0495339 A1
- EP 0824124 A
- EP 3000792 A1


### In der Beschreibung aufgeführte Nicht-Patentliteratur


- IUPAC Compendium of Chemical Terminology. **A. D. MCNAUGHT** ; **A. WILKINSON**. Gold Book. Blackwell Scientific Publications, 1997
- *CHEMICAL ABSTRACTS*, 13374-44-2
- *CHEMICAL ABSTRACTS*, 96-08-2
- *CHEMICAL ABSTRACTS*, 1584677-14-4
- *CHEMICAL ABSTRACTS*, 4223-14-7
- *CHEMICAL ABSTRACTS*, 1393710-63-8
- *CHEMICAL ABSTRACTS*, 105839-17-6
- *CHEMICAL ABSTRACTS*, 1260636-34-7
- *CHEMICAL ABSTRACTS*, 63284-28-6
- **MICHAEL DOMBUSCH** ; **ULRICH CHRIST** ; **ROB RASING**. Epoxidharze. Vincentz Network GmbH & Co KG, 2015
- **LEE HAND NEVILLE K**. Handbook of Epoxy Resins. McGraw-Hill, 1982